# EUROPÄISCHE PATENTANMELDUNG

(11) **EP 0 758 079 A2**
(43) Veröffentlichungstag der Anmeldung: **12.02.1997**
(21) Anmeldenummer: 96112407.0
(22) Anmeldetag: 01.08.1996
(51) Int. Cl.: G01J 3/18, G01N 21/35

(54) **Mikrostrukturiertes Infrarot-Absorptionsphotometer**

(30) Priorität: 07.08.1995 DE 19528919
(71) Anmelder: MICROPARTS GESELLSCHAFT FÜR MIKROSTRUKTURTECHNIK mbH, D-44227 Dortmund (DE)
(72) Erfinder: Ünal, Nezih, 44227 Dortmund (DE); Pannhoff, Helge, 20535 Hamburg (DE); Landwehr, Dierk, Dr., 48249 Dülmen (DE); Dürselen, Lothar E., 40723 Hilden (DE)

(57) **Zusammenfassung**

Gase lassen sich wegen ihrer gasspezifischen Absorption im infraroten(IR) Spektralbereich mittels eines Spektrometers selektiv nachweisen. Die bekannten Geräte liefern zwar recht genaue Ergebnisse, sie sind jedoch im allgemeinen teuer, von beachtlicher Größe und stellen erhöhte Anforderungen an die Bedienung und Wartung.

Für die kontinuierliche Überwachung eines Gasstromes oder Gasraumes wird ein IR-Absorptionsphotometer angegeben, das aus einem als Mikrostrukturkörper hergestellten einstückigen Formteil besteht. Das Photometer ist kompakt und robust; es ist auch für transportable Geräte geeignet. Es läßt sich in großer Stückzahl kostengünstig herstellen und ist in Metall-Ausführung auch bei erhöhter Temperatur einsetzbar.

Als IR-Strahlungsquelle dient eine (Xenon-)Blitzlampe und als IR-Strahlungsempfänger ein Bleiselenid-Empfänger. Die Pulsfolgefrequenz der Blitzlampe beträgt von 0,01 Hz bis 10 Hz und der Pulsabstand bevorzugt mehr als das Tausendfache der Pulsdauer.

Mit dem neuen Photometer kann die Sicherheit von Anlagen, in denen brennbare, giftige oder andere Gase enthalten sind oder auftreten können, auf wirtschaftliche Weise erhöht werden.

## Beschreibung

Die Erfindung betrifft ein mikrostrukturiertes Photometer für den Infrarot(IR)-Spektralbereich zum Nachweisen von absorbierenden Stoffen oder Komponenten in Stoffgemischen, z.B. in Fluiden. Ferner betrifft die Erfindung ein Verfahren zum Messen der Absorption (Extinktion) mittels dieses Photometers.

Für die Absorptionsphotometrie gibt es die bekannten Spektralphotometer, bei denen die polyfrequente IR-Strahlung durch ein Gitter zerlegt wird. Mit diesen Geräten lassen sich sehr unterschiedliche und komplexe Fragestellungen bearbeiten und exakte Ergebnisse erhalten. Die Geräte haben jedoch eine beträchtliche Größe, sie sind in allgemeinen nur stationär einsetzbar und vergleichsweise teuer. Zum Durchstimmen eines größeren Spektralbereiches sind in der Regel lange Meßzeiten erforderlich. Die Geräte verlangen eine sorgfältige Behandlung und Handhabung und werden in der Regel nur durch geschultes Personal bedient.

Neben den Spektralphotometern sind Filterphotometer bekannt, bei denen der für das Messen der Absorption betrachtete Spektralbereich durch optische Filter, z.B. Interferenzfilter, festgelegt wird.

Zum Messen der Absorption eines bestimmten Stoffes genügt im allgemeinen ein schmaler Spektralbereich. Sollen mehrere Stoffe analysiert werden, ist die Absorption in mehreren Spektralbereichen zu bestimmen. Zum Eliminieren äußerer Einflüsse wird oft eine Referenzwellenlänge benutzt.

In DE - 44 43 814.2 ist ein IR-spektrometrischer Sensor für Gase beschrieben. Dieser besteht aus einem mikrostrukturierten Formteil und enthält ein Spiegelgitter, einen Anschluß zum Einkoppeln von polyfrequenter IR-Strahlung sowie einen Anschluß zum Auskoppeln monofrequenter IR-Strahlung.

Die bekannten Photometer enthalten eine Strahlungsquelle und mindestens einen Strahlungsempfänger, der von dem durch den nachzuweisenden Stoff geschwächten Strahl getroffen wird. Der Strahlungsempfänger kann nacheinander von spektral zerlegter Strahlung verschiedener Wellenlängen getroffen werden, was bevorzugt durch Drehen des Monochromators erreicht wird. Die Strahlungsquelle ist im Betriebszustand des Photometers ständig eingeschaltet. Der Strahlungsempfänger ist ständig der zerlegten Strahlung ausgesetzt, oder der Strahlengang wird durch einen Zerhacker unterbrochen. Der Zerhacker kann z.B. mechanisch arbeiten.

Als Strahlungsquellen werden im IR-Bereich thermische Quellen oder Halbleiterdioden eingesetzt. Thermische Strahler mit ausreichender Strahlungsleistung im IR-Bereich geben sehr viel Wärme an die Umgebung ab, wodurch die benachbarten Bauteile mit der Zeit aufgeheizt werden und diffuse IR-Strahlung abgeben, die das Meßsignal stört und überdecken kann. Diese Störung macht sich besonders bei einem kompakt gebauten mikrostrukturierten IR-Photometer bemerkbar. Nach hinreichender Erwärmung ist der Spalt zum Einkoppeln der IR-Strahlung nicht mehr ausreichend definiert, wodurch die Auflösung des Photometers vermindert wird oder verloren geht. Weiter sind die bekannten thermischen Strahler mit ausreichender Leistung träge und für unterbrochenen Betrieb ungeeignet.

Damit stellt sich die Aufgabe, eine IR-Strahlungsquelle für ein mikrostrukturiertes IR-Photometer zu finden, durch die das Photometer möglichst wenig erwärmt wird.

Diese Aufgabe wird erfindungsgemäß gelöst durch ein mikrostrukturiertes IR-Absorptionsphotometer mit einem als Mikrostruktur hergestellten einstückigen Formteil, das aus einer Grundplatte, einem Spiegelgitter zum Zerlegen der IR-Strahlung, einem Anschluß zum Einkoppeln von polyfrequenter IR-Strahlung, mindestens einem Anschluß zum Auskoppeln monofrequenter IR-Strahlung, einem freien Raum zwischen dem Spiegelgitter und den Anschlüssen für die IR-Strahlung, sowie einer Abdeckplatte über dem freien Raum, die mit dem Formteil verbunden ist, besteht, mit einer IR-Strahlungsquelle und mindestens einem IR-Strahlungsempfänger, gekennzeichnet durch eine Blitzlampe als IR-Strahlungsquelle und einen IR-Strahlungsempfänger, dessen Ansprechzeit kürzer ist als die Pulsdauer der Blitzlampe.

Als Blitzlampen sind handelsübliche Gasentladungslampen geeignet, z.B. die mit Xenon gefüllten Lampen. Die kleinsten Ausführungen sind röhrenförmige Lampen, die einige Zentimeter lang sind und einen Durchmesser von einigen Millimetern haben. In miniaturisierter Form können sie noch kleiner sein. Der Entladungsblitz dauert einige Mikrosekunden, wobei eine IR-Strahlung beträchtlicher Intensität emittiert wird.

Als Strahlungsempfänger sind z.B. solche IR-Strahlungsempfänger geeignet, deren Ansprechzeit von 0,5 · 10⁻⁶ Sekunden bis 1 Sekunde beträgt, z.B. Bleiselenid-Strahlungsempfänger.

Das als Mikrostruktur hergestellte Formteil kann aus Kunststoff (wie Polymethylmethacrylat, Polysulfon, Polycarbonat) oder aus Metall (wie Nickel, Nickel-Cobalt, Gold, Kupfer) bestehen.

Mit dem erfindungsgemäßen mikrostrukturierten IR-Absorptionsphotometer wird die Absorption von Stoffen gemessen, wobei eine Pulsfolgefrequenz von 0,01 Hz bis 10 Hz bei einer Pulsdauer von 10⁻⁶ bis 1 Sekunde gewählt wird. Der Pulsabstand wird bevorzugt auf mehr als das Tausendfache der Pulsdauer eingestellt.

Das IR-Absorptionsphotometer kann mehr als einen Auskoppelspalt enthalten, wobei hinter jedem Auskoppelspalt ein IR-Strahlungsempfänger angebracht ist. Damit kann man die Absorption des zu untersuchenden Fluids bei mehreren benachbarten Wellenlängen messen. Eine weitere Wellenlänge, bei der keine Absorption eintritt, kann als Referenzwellenlänge verwendet werden.

Das erfindungsgemäße mikrostrukturierte IR-Absorptionsphotometer wird für die quantitative Analyse von Gasen oder Gasgemischen, z.B. gasförmigen Kohlenwasserstoffen (wie Methan, Ethan, Propan, Butan und anderen) oder von Kohlendioxid, Kohlenmonoxid, Stickoxid, Wasserdampf, Ammoniak und anderen verwendet.

Der zu untersuchende Stoff befindet sich in dem bevorzugt offenen Raum zwischen Blitzlampe und Eintrittsspalt. Durch diesen Raum kann z.B. ein zu untersuchendes Gas durch Konvektion ungehindert hindurchströmen, oder gasförmige Anteile können durch Diffusion in diesen Raum gelangen.

Das erfindungsgemäße IR-Photometer hat folgende Vorteile:
-- Wegen der kurzen Pulsdauer und der niedrigen Pulsfolgefrequenz wird die abgegebene Wärmemenge klein gehalten. Die Temperatur des IR-Photometers gegenüber der Umgebung wird nur geringfügig oder gar nicht erhöht.
-- Bei zu untersuchenden Fluiden, deren Zusammensetzung sich über große Zeitabschnitte (von Minuten oder Stunden) nur langsam oder nur geringfügig ändert, ist eine niedrige Pulsfolgefreguenz hinreichend, um derartige Veränderungen zuverlässig zu erfassen. Für niedrige Pulsfolgefrequenzen ist das IR-Photometer besonders geeignet.
-- Die große Intensität des Lichtblitzes im IR-Bereich erlaubt, für die monofrequente IR-Strahlung preisgünstige Detektoren mit mäßig großer Empfindlichkeit zu verwenden.
-- Die Blitzlampe ist mechanisch unempfindlicher als eine thermische Strahlungsquelle mit gewendeltem Glühdraht.
-- Das mikrostrukturierte IR-Photometer ist als Ganzes unempfindlich gegen Erschütterungen und damit für mobilen Einsatz gut geeignet.
-- Die Lebensdauer der mit niedriger Pulsfolgefrequenz betriebenen Blitzlampe beträgt viele Jahre und ist damit wesentlich größer als die Lebensdauer von thermischen Strahlungsquellen. Deshalb verlangt das Photometer nur einen sehr geringen Wartungsaufwand.
-- Auch bei niedriger Pulsfolgefrequenz kann das zu untersuchende Fluid quasi-kontinuierlich überwacht werden, so lange sich die Zusammensetzung des Fluids nur allmählich ändert.

Das erfindungsgemäße IR-Photometer wird anhand der Figuren näher erläutert.

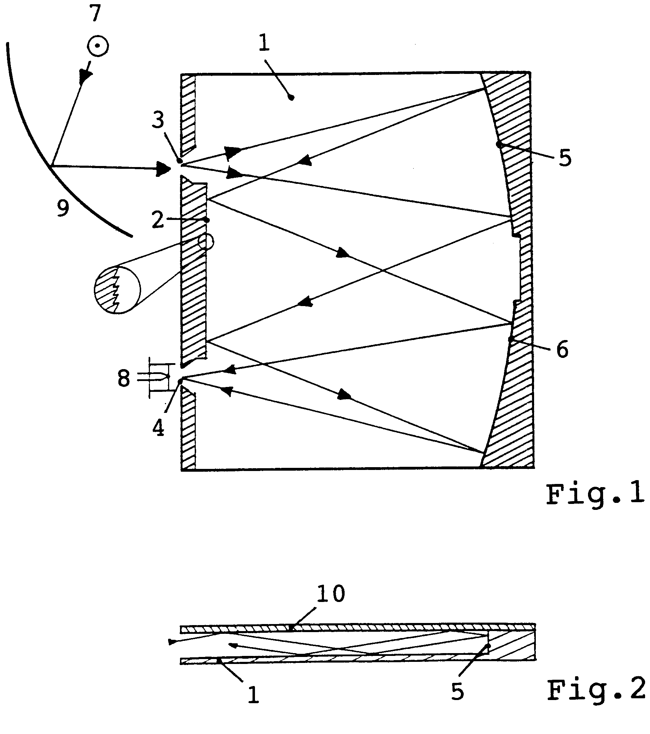

In Figur 1 ist das mikrostrukturierte IR-Photometer in der Ansicht von der offenen Seite des freien Raumes dargestellt. Auf der Grundplatte (1) sind ein planes Spiegelgitter (2) sowie der Spalt (3) zum Einkoppeln von polyfrequenter IR-Strahlung und der Spalt (4) zum Auskoppeln monofrequenter IR-Strahlung angebracht. Die beiden Hohlspiegel (5) und (6) liegen dem Spiegelgitter gegenüber. Zwischen dem Spiegelgitter (2) und den Hohlspiegeln (5) und (6) liegt der freie Raum. Die Längsseiten des freien Raumes können offen oder geschlossen sein. Auf der Außenseite des Einkoppelspaltes (3) ist die Blitzlampe (7) als IR-Strahlungsquelle angebracht, auf der Außenseite des Auskoppelspaltes (4) ist der IR-Strahlungsempfänger (8) angebracht. Die Blitzlampe wird mittels des Hohlspiegels (9) auf dem Einkoppelspalt (3) abgebildet. Die in Figur 1 schraffiert dargestellten Teile stehen oberhalb der Grundplatte vor. Die Grundplatte (1) mit den darauf fest angeordneten Elementen (2) bis (6) sind das als Mikrostruktur hergestellte einstückige Formteil.

Mittels der beiden Hohlspiegel (5) und (6) wird der IR-Strahl innerhalb des freien Raumes reflektiert, um den Weg des IR-Strahls zu verlängern.

Der zu untersuchende Stoff befindet sich in dem Raum zwischen Blitzlampe (7), Hohlspiegel (9) und Eintrittsspalt (3). Dieser Raum ist offen. Ein Gas z.B. kann durch diesen Raum frei hindurchströmen.

Figur 2 zeigt einen Längsschnitt durch das IR-Photometer. Der freie Raum ist mit der Platte (10) abgedeckt. Die von der IR-Strahlungsquelle kommende Strahlung wird an den Wänden des freien Raumes mehrfach reflektiert.

### Beispiel: Mikrostrukturiertes IR-Absorptionsphotometer für brennbare Gase

Brennbare Kohlenwasserstoffe wie Methan, Ethan, Propan und Butan absorbieren IR-Strahlung im Bereich um 3,38 µm (2 960 cm⁻¹). Zum Nachweis von Propan in Luft wird ein erfindungsgemäßes mikrostrukturiertes IR-Photometer benutzt.

Das mikrostrukturierte IR-Photometer entsprechend Figur 1 ist etwa 25 mm lang und etwa 20 mm breit. Der freie Raum ist etwa 500 µm hoch. Die Innenseite des in LIGA-Technik hergestellten mikrostrukturierten Formteils aus Polymethylmethacrylat und die Innenseite der Abdeckplatte aus Polymethylmethacrylat sowie das Spiegelgitter sind vergoldet. Das Spiegelgitter hat 200 Linien/mm. Der Blazewinkel ist angepaßt an die maximale Reflexion dieses Spiegelgitters im Bereich 3,4 µm (2 940 cm⁻¹) in erster Beugungsordnung.

Der etwa 0,4 mm breite Einkoppelspalt des IR-Photometers wird mit einer Blitzlappe beleuchtet. Als Blitzlampe wird eine handelsübliche Lampe, z.B. die Xenon-Blitzröhre BGA 1020 TAR 3 (Hersteller: Heimann) benutzt. Diese Blitzröhre ist 34 mm lang und hat einen Durchmesser von 3,15 mm. Die Röhre besteht aus Hartglas. Die Vorspannung beträgt 320 Volt und die Zündspannung 11 kV. Die mittlere Energie beträgt etwa 2 Wattsekunden pro Puls, und die Pulsdauer etwa 10 µs. Diese Blitzlampe hat im IR-Bereich um 3,4 µm (2 940 cm⁻¹) eine große Strahlungsstärke. Die Blitzlampe wird mittels eines Hohlspiegels, der etwa 2 cm vor dem Einkoppelspalt liegt, auf dem Einkoppelspalt abgebildet.

Die vom Spiegelgitter reflektierte Strahlung wird auf den etwa 0,4 mm breiten Auskoppelspalt gerichtet; dieser Spalt liegt an der Stelle, an der die Wellenlänge 3,4 µm (2 940 cm⁻¹) erscheint. Hinter dem Auskoppelspalt ist ein Bleiselenid-Strahlungsempfänger angebracht. Dessen Ansprechzeit beträgt etwa 1,5 µs; sie ist kleiner als die Pulsdauer der Blitzlampe.

Der Raum zwischen dem Hohlspiegel (9) und dem Eintrittsspalt (3) dient als Gasküvette ohne Seitenwände. Das Gas strömt durch Konvektion mit einem Durchsatz von etwa 100 cm³ pro Minute durch diesen Raum. Das Gas besteht im wesentlichen aus Luft und kann zeitweise Propan enthalten.

Bei Anwesenheit von Propan wird die vom Strahlungsempfänger bei 3,38 µm (2 960 cm⁻¹) empfangene Intensität gemäß dem Extinktionsgesetz mit steigender Konzentration von Propan kleiner.

Mit diesem mikrostrukturierten IR-Photometer lassen sich Propan-Anteile in Luft erfassen, die etwa 10 % der Konzentration des Propan-haltigen zündfähigen Gemisches ausmachen, also etwa 0,2 % Propan in Luft. Damit kann man z.B. Lecks in gasbetriebenen Anlagen nachweisen. Die untere Explosionsgrenze eines Propan-Luft-Gemisches liegt bei 1,8 % Propangehalt.

## Patentansprüche

1. Mikrostrukturiertes Infrarot(IR)-Absorptionsphotometer mit einem als Mikrostruktur hergestellten einstückigen Formteil, das aus einer Grundplatte, einem Spiegelgitter zum Zerlegen der IR-Strahlung, einem Anschluß zum Einkoppeln von polyfrequenter IR-Strahlung, mindestens einem Anschluß zum Auskoppeln monofrequenter IR-Strahlung, einem freien Raum zwischen dem Spiegelgitter und den Anschlüssen für die IR-Strahlung, sowie einer Abdeckplatte über dem freien Raum, besteht, mit einer IR-Strahlungsquelle und mindestens einem IR-Strahlungsempfänger, gekennzeichnet durch
- eine Blitzlampe als IR-Strahlungsquelle und
- einen IR-Strahlungsempfänger, dessen Ansprechzeit kürzer als die Pulsdauer der Blitzlampe ist.

2. Mikrostrukturiertes IR-Absorptionsphotometer nach Anspruch 1, gekennzeichnet durch
- eine Xenon-Blitzlampe als IR-Strahlungsquelle und
- einen Bleiselenid-Strahlungsempfänger.

3. Mikrostrukturiertes IR-Absorptionsphotometer nach den Ansprüchen 1 und 2, gekennzeichnet durch
- ein mikrostrukturiertes einstückiges Formteil, das aus Kunststoff oder Metall besteht.

4. Verfahren zum Messen der Absorption von Fluiden unter Verwendung eines mikrostrukturierten IR-Absorptionsphotometers nach Anspruch 1, wobei
- eine Pulsfolgefrequenz der Blitzlampe von 0,01 Hz bis 10 Hz,
- eine Pulsdauer der Blitze von 10⁻⁶ Sekunden bis 1 Sekunde, und
- eine Ansprechzeit des IR-Strahlungsempfängers von 0,5 · 10⁻⁶ Sekunden bis 1 Sekunde
gewählt wird.

5. Verfahren nach Anspruch 4, gekennzeichnet durch
- einen Pulsabstand, der bevorzugt größer als das Tausendfache der Pulsdauer gewählt wird.

6. Verwenden des mikrostrukturierten IR-Absorptionsphotometers nach den Ansprüchen 1 bis 3 zur quantitativen Analyse von Gasen oder Gasgemischen, bevorzugt gasförmigen Kohlenwasserstoffen oder Kohlendioxid, Kohlenmonoxid, Stickoxid, Wasserdampf, Ammoniak.
